(19) **Europäisches Patentamt / European Patent Office / Office européen des brevets**

(11) **EP 2 489 631 B1**

(12) **EUROPEAN PATENT SPECIFICATION**

(45) Date of publication and mention
of the grant of the patent:
**27.11.2019 Bulletin 2019/48**

(21) Application number: **10823390.9**

(22) Date of filing: **12.10.2010**

(51) Int Cl.:
$C01B\ 33/18$ (2006.01)  $C01G\ 23/047$ (2006.01)
$C01G\ 25/02$ (2006.01)  $C01G\ 51/04$ (2006.01)
$C01F\ 7/02$ (2006.01)  $C01F\ 17/00$ (2006.01)
$C01G\ 3/02$ (2006.01)  $C01G\ 9/02$ (2006.01)
$C01B\ 13/14$ (2006.01)  $C01G\ 1/02$ (2006.01)

(86) International application number:
**PCT/JP2010/067897**

(87) International publication number:
**WO 2011/046122 (21.04.2011 Gazette 2011/16)**

(54) **METHOD FOR PRODUCING BEAD-LIKE HOLLOW PARTICLES**

VERFAHREN ZUR HERSTELLUNG VON KUGELFÖRMIGEN HOHLEN PARTIKELN

PROCÉDÉ DE FABRICATION PARTICULES CREUSES DE TYPE PERLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.10.2009 JP 2009236110
26.04.2010 JP 2010100790**

(43) Date of publication of application:
**22.08.2012 Bulletin 2012/34**

(73) Proprietor: **Akebono Brake Industry Co., Ltd.
Tokyo 103-8534 (JP)**

(72) Inventors:
- **OKUMURA Naeko**
  **Tokyo 103-8534 (JP)**
- **HATORI Koichi**
  **Tokyo 103-8534 (JP)**
- **HASHIMOTO Akinori**
  **Tokyo 103-8534 (JP)**
- **SUGAI Yoshiyuki**
  **Tokyo 103-8534 (JP)**
- **IDEI Hiroshi**
  **Tokyo 103-8534 (JP)**

(74) Representative: **Grünecker Patent- und
Rechtsanwälte
PartG mbB
Leopoldstraße 4
80802 München (DE)**

(56) References cited:
WO-A1-2008/123558  JP-A- 7 257 919
JP-A- 62 096 537  JP-A- 2006 326 557
JP-A- 2008 254 994  JP-A- 2010 168 268

- LI P ET AL: "Hydrothermal synthesis of TiO2 hollow spheres using rapeseed pollen grains as template", JOURNAL OF INORGANIC MATERIALS JANUARY 2008 SCIENCE PRESS; RESEARCH CENTER FOR ECO-ENVIRONMENTAL SCIENCES; CHINESE ACADEMY OF SCIENCES CN, vol. 23, no. 1, January 2008 (2008-01), pages 49-54, XP002759259, DOI: 10.3724/SP.J.1077.2008.00049
- DATABASE COMPENDEX [Online] ENGINEERING INFORMATION, INC., NEW YORK, NY, US; 2007, OGI T ET AL: "Control of particle morphology from porous to hollow by spray-drying with a two-fluid nozzle and template materials", XP002759295, Database accession no. E20074410891990 & OGI T ET AL: "Control of particle morphology from porous to hollow by spray-drying with a two-fluid nozzle and template materials", KAGAKU KOGAKU RONBUNSHU 2007 SOCIETY OF CHEMICAL ENGINEERS, JAPAN; KYORITSU BUILDING JP, vol. 33, no. 5, 22 October 2007 (2007-10-22), pages 468-475, DOI: 10.1252/KAKORONBUNSHU.33.468

**(Cont. next page)**

**EP 2 489 631 B1**

• YANG, YUN ET AL: "A green route to silica nanoparticles with tunable size and structure", GREEN CHEMISTRY, vol. 10, no. 2, 2008, pages 183-190, XP002759299, ISSN: 1463-9262, DOI: 10.1039/B713438J

**Description**

Technical Field

The present invention relates to a method for producing bead-like hollow particles for use in a friction material, according to claim 1.

Background Art

Hollow particles have characteristics such as lightness in weight and heat insulation and thus have been utilized in uses such as heat insulating materials, friction materials, and lightweight aggregates. As methods for producing such hollow particles, various methods have been proposed (see PTL1, PTL2, and PTL3).

The method described in PTL1 includes hydrolyzing an alkoxide of a metal such as zirconium, titanium, or silicon to precipitate a hydrolyzate of the metal alkoxide on a particulate biological material such as yeast or starch by adding an aqueous dispersion of the particulate biological material to an alcohol solution of the metal alkoxide, thereby obtaining a core/shell composite
composed of the particulate biological material as a core and a layer of the hydrolyzate of the particulate metal oxide as a shell, and subsequently subjecting the core/shell composite to a heat treatment after washing with water and drying; thereby obtaining objective hollow particles through formation of a metal oxide caused by dehydrative condensation of the hydrolyzate of the metal alkoxide and through formation of hollow portions caused by heat decomposition of the particulate biological material.

With regard to the hollow particles obtained by the method of PTL1, the surface is porous but the shape is almost limited to a spherical one depending on the shape of the particulate biological material used as the core, so that it is extremely difficult to make odd-shaped hollow particles.

Moreover, the method described in PTL2 includes preparing calcium carbonate whose primary particles have a diameter of 20 to 200 nm, coating the calcium carbonate with silica using a sol-gel method, and subsequently adding an acid to remove calcium carbonate, thereby obtaining hollow particles composed of silica. The hollow particles have a particle diameter of 30 to 800 nm measured by a static light scattering method and are highly dispersible particles composed of a dense silica shell where 2 to 20 nm is not detected in a fine pore distribution measured by a mercury penetration method.

The method described in PTL3 includes mixing a metal oxide such as alumina or silica into a resin powder with pressure welding to cover the surface of the resin powder with the metal oxide and subsequently baking the resulting powder to remove the resin powder through heat decomposition and oxidation and also to sinter the metal oxide each other, thereby obtaining objective hollow particles.

However, the hollow particles obtained by the methods described in Patent Literatures 2 and 3 have all approximately perfect spherical shapes and it has been difficult to make hollow particles having an odd shape other than a spherical shape.

Moreover, in friction brakes to be used in automobiles, it has been proposed to blend a hollow material in order to reduce brake noise. In PTL4, it is disclosed to use hollow particles where their outer shell is formed by binding a large number of rod-like, columnar, cylindrical, strip-shaped, particulate and/or plate-shaped alkali titanate particles.

However, since the pressure resistance is extremely low in the hollow particles described in PTL4, the hollow shape is destroyed in many particles by pressure at molding a friction material, so that the effect of reducing the brake noise cannot be sufficiently exhibited.

The formation of a metal oxide shell made of titanium oxide by hydrothermal synthesis is described in LI P ET AL, "Hydrothermal synthesis of TiO2 hollow spheres using rapeseed pollen grains as template", JOURNAL OF INORGANIC MATERIALS JANUARY 2008 SCIENCE PRESS; RESEARCH CENTER FOR ECO-ENVIRONMENTAL SCIENCES; CHINESE ACADEMY OF SCIENCES CN, (200801), vol. 23, no. 1, pages 49 - 54. In this document, titanium oxide is absorbed by the pollen grains as a template and then the pollen grains are removed by calcinations at 550° C.

OGI T ET AL, "Control of particle morphology from porous to hollow by spray-drying with a two-fluid nozzle and template materials", KAGAKU KOGAKU RONBUNSHU 2007 SOCIETY OF CHEMICAL ENGINEERS, JAPAN; KYORITSU BUILDING JP, (20071022), vol. 33, no. 5, pages 468 - 475, disclose the method, wherein hollow particles are produced by spray-drying with a two-fluid nozzle. In a first step, silica or titanium particles are absorbed on a polystyrene latex and then spray-drying is applied. Thereafter, heating is done to obtain hollow particles. Further methods for producing particles are described in YANG, YUN ET AL, "A green route to silica nanoparticles with tunable size and structure", GREEN CHEMISTRY, (2008), vol. 10, no. 2, pages 183 - 190.

Citation List

Patent Literatures

PTL1: JP-A-2006-326557
PTL2: JP-A-2005-263550
PTL3: JP-A-2003-160330
PTL4: JP-A-2009-114050

Summary of Invention

Technical Problem

An object of the present invention is to provide odd-shaped bead-like hollow particles that are difficult to produce by the methods described in the above-mentioned Patent Literatures 1 to 3 and a method for easily and conveniently producing the bead-like hollow particles.

Moreover, another object of the invention is to provide a friction material that achieves both of reduction of the brake noise and improvement of material strength, which cannot be solved by the material described in the above-mentioned PTL4.

Solution to Problem

In view of OGI T ET AL, "Control of particle morphology from porous to hollow by spray-drying with a two-fluid nozzle and template materials", KAGAKU KOGAKU RONBUNSHU 2007 SOCIETY OF CHEMICAL ENGINEERS, JAPAN; KYORITSU BUILDING JP, (20071022), vol. 33, no. 5, pages 468 - 475, it is an object of the present invention to provide an improved friction material.

In order to solve the aforementioned object, the present invention proposes a method defined in claim 1. Further preferred embodiments of this method are defined in the dependent claims 2 to 4. As a result of extensive studies for achieving the above objects, the present inventors have found that bead-iike hollow particles comprising odd-shaped particles composed of a metal oxide as a main component and having a through hole or non-through hole in the surface are obtained by subjecting a suspension of a particulate biological material such as yeast or starch and a particulate metal oxide such as silica or alumina to a spray drying treatment by means of a two-fluid nozzle spray dryer and subjecting the obtained powder composed of the particulate biological material as a core and a layer of the particulate metal oxide as a shell to a heat treatment.

Moreover, the inventors have found that a friction material for brakes capable of reducing the brake noise and also improving the material strength is obtained by blending the bead-like hollow particles obtained in the above into a friction material and thus the objects can be achieved.

The invention is completed based on such findings.

Advantageous Effects of Invention

According to the invention, bead-like hollow particles comprising odd-shaped particles composed of a metal oxide as a main component and having a through hole or non-through hole in the surface have been able to be obtained by spraying and draying a suspension of a particulate biological material and a particulate metal oxide by a two-fluid nozzle spray dryer to obtain powder composed of the particulate biological material as a core and a layer of the particulate metal oxide as a shell and heating the obtained powder. In this regard, by performing the heat treatment, the core particulate biological material is heatly decomposed to form a hollow portion composed of at least one of a through hole and non-through hole.

Moreover, according to the invention, a friction material for brakes capable of reducing the brake noise and also improving the material strength can be provided by blending bead-like hollow particles thus obtained. It seems that this is because the binding with a binder or the like is more strengthened by a so-called anchor effect as compared with the case of simple spherical particles since the shape of the bead-like hollow particles is an odd shape and also the binding with the binder is further strengthened by penetration of the binder into the hollow portion composed of the through hole or non-through hole of the bead-like hollow particles at production.

Brief Description of Drawings

FIG. 1 is a drawing based on an electron micrograph of a hollow particles obtained in Embodiment 1.
FIG. 2 is a drawing based on an electron micrograph of a hollow particles obtained in Comparative Example 1.
FIG. 3 is a drawing based on an electron micrograph of a hollow particles obtained in Embodiment 2.

Description of Embodiments

[Bead-like Hollow Particles and Method for Producing the Same]

First, the bead-like hollow particles of the invention and the method for producing the same will be explained.

The bead-like hollow particles of the invention comprise odd-shaped particles composed of a metal oxide as a main component and having at least one of a through hole and non-through hole in the surface. Here, the term "odd-shaped particles" means particles which have a shape different from a spherical shape and include particles having a circle shape and particles having an elliptic shape in plane view. The odd-shaped particles specifically refer to clumpy ones, columnar ones, cylindrical ones, and the like. The bead-like hollow particles of the invention can be preferably produced by the method for producing bead-like hollow particles of the invention to be mentioned below.

The method for producing bead-like hollow particles of the invention comprises spraying and drying a suspension of a particulate biological material and a particulate metal oxide by a two-fluid nozzle spray dryer to obtain a powder composed of the particulate biological material as a core and a layer of the particulate metal oxide as a shell, and heating the obtained powder.

The particulate biological material to be used in the invention is selected from yeast, starch, fungi, algae, spores, and pollen, and particularly, it is preferred to use yeast or starch.

As the yeast, any of brewer's yeast, wine yeast, baker's yeast, and the like can be used. As the starch, any of corn starch, wheat starch, rice starch, bean starch, potato starch, and the like can be used. As the fungi, mushrooms, molds, and the like can be used. As the algae, any of wakame seaweed, kombu (tangle), Agar-agar (Gelidium amansii), and the like can be used. As the spores, pteridophyte, bryophyte, and the like can be used and, as the pollen, pollen of trees such as Japanese cider and Japanese cypress, pollen of flowering plants such as flowers and grasses, and the like can be used.

The average particle diameter of the particulate biological material is appropriately selected based on the average particle diameter of the bead-like hollow particles to be obtained but is preferably 0.5 to 10$\mu$m, more preferably 1 to 6$\mu$m, and particularly preferably 3 to 5$\mu$m.

The particulate metal oxide to be used in the invention is selected from particulate silica, alumina, zinc oxide, titania, yttria, copper oxide, cobalt oxide, and zirconia and particularly, it is preferred to use particulate silica, alumina, or zirconia. Furthermore, they are preferably an aqueous sol-form ones and, at heating after the formation of the shell, a strong film can be formed by gelation.

The average particle diameter of the particulate metal oxide is preferably remarkably smaller than the average particle diameter of the particulate biological material so that the layer of the particulate metal oxide is formed on the periphery of the particulate biological material and is usually 5 to 400 nm, more preferably 5 to 70nm, and particularly preferably 5 to 20nm.

In the invention, first, a suspension of the above particulate biological material and particulate metal oxide is prepared. The preparation of the suspension can be easily carried out by stirring and mixing the particulate biological material and the particulate metal oxide in water.

The mixing ratio defined by dividing the particulate biological material by the particulate metal oxide in the suspension is preferably 1/0.5 to 1/2 on the basis of solid mass weight. When the mixing ratio is smaller than 1/2, the ratio of the biological material is small, and the ratio of the metal oxide is large, bead-like pores are not obtained in the surface of the obtained particles. Moreover, when the mixing ratio is larger than 1/0.5, the ratio of the biological material is large, and the ratio of the metal oxide is small, the obtained particles do not form hollows. On the other hand, when the mixing ratio is 1/0.5 to 1/2, the aforementioned problems do not arise and desired bead-like hollow particles can be obtained. The mixing ratio of the particulate biological material to the particulate metal oxide is more preferably 1/1 to 1/2.

In the invention, the suspension of the particulate biological material and the particulate metal oxide prepared in the above is then subjected to a spray drying treatment by means of a two-fluid nozzle spray dryer. The two-fluid nozzle spray dryer is an apparatus for pulverizing a liquid by a fast gas stream to form fine particles, spraying fine mist at a low pressure, and drying it under heating. For example, there may be mentioned a two-fluid nozzle spray dryer manufactured by Ohkawara Kakohki Co., Ltd.

Main running conditions of the two-fluid nozzle spray dryer are described as follows.

Hot air temperature: 180°C or higher
Atmosphere: atmospheric air
Spraying pressure: 0.2 to 0.4MPa
Liquid-feeding rate: 5 to 40g/minute

In the invention, a powder composed of the particulate biological material as a core and a layer of the particulate metal oxide as a shell can be obtained by the spray drying treatment of the suspension by means of the two-fluid nozzle spray dryer. Then, by heating the powder, the particulate biological material as the core is heatly decomposed to form a hollow portion composed of at least one of a through hole and non-through hole and also the layer of the particulate metal oxide as the shell is sintered to form a strong periphery portion, whereby objective bead-like hollow particles can be obtained.

The temperature for the heat treatment is necessarily a temperature at which the heat decomposition of the particulate biological material as the core and the sintering of the layer of the particulate metal oxide as the shell are effected, and the temperature is usually preferably 500 to 900°C, more preferably 700 to 900°C.

Moreover, the time for the heat treatment is usually preferably 1 to 16 hours, more preferably 2 to 8 hours.

The hollow particles obtained by the invention are bead-like hollow particles having at least one of a through hole and non-through hole in the particle surface and has characteristics such as lightness in weight and heat insulation, so that the particles are preferably used in heat insulating materials, friction materials, and the like.

[Friction Material]

Next, the friction material of the invention will be explained.

The friction material of the invention comprises the aforementioned bead-like hollow particles of the invention.

(Bead-like Hollow Particles)

The average particle diameter of the bead-like hollow particles is preferably 1 to 10μm, more preferably 2 to 6μm. The reason why the average particle diameter of the bead-like hollow particles is preferably 1 to 10μm is as follows: when the diameter is less than 1μm, the particles are aggregated each other and dispersibility at mixing is poor, so that a sufficient performance as a friction material cannot be exhibited; on the other hand, when the diameter exceeds 10 μm, the particles are too large and thus fall away at braking, so that a sufficient performance as a friction material cannot be exhibited; but when the diameter is 1 to 10 μm, such problems do not arise.

Moreover, the mixing ratio of the bead-like hollow particles is preferably 1 to 6% by volume, more preferably 2 to 4% by volume. The reason why the mixing ratio of the bead-like hollow particles is preferably 1 to 6% by volume is as follows: when the ratio exceeds 6% by volume, aggressiveness against the opposite material (disc rotor) increases; on the other hand, when the ratio is less than 1% by volume, the reduction of the brake noise and the improvement in the material strength are not expectable; but when the ratio is 1 to 6% by volume, such problems do not arise.

The following will explain a friction modifier, a binder resin, and a fibrous material, which are components for the friction material to be used together with the bead-like hollow particles.

(Friction Modifier)

The friction modifier to be contained in the composition for the friction material is not particularly limited. For example, the friction modifier may be graphite and fluorinated graphite as lubricants; metal sulfides such as tin sulfide and tungsten disulfide; boron nitride and the like. They may be used singly or two or more thereof may be used in combination. Moreover, the friction modifier may be inorganic friction modifiers including metal oxides such as alumina, silica, magnesia, zirconia, and iron oxide; zirconium silicate; silicon carbide; powders of metals such as copper, brass, zinc, and iron and powders of titanate salts; and the like and organic friction modifiers including dusts of rubbers such as NBR, SBR, and tire tread; organic dusts such as cashew dust; and the like. They may be used singly or two or more thereof may be used in combination.

Furthermore, a clay mineral can be incorporated as a friction modifier or a reinforcing material. As the clay mineral, for example, kaolin, talc, smectite, vermiculite, mica, and the like may be mentioned. Moreover, calcium carbonate, barium sulfate, calcium hydroxide, or the like can be incorporated.

(Binder Resin)

The binder resin to be contained in the composition for the friction material is not particularly limited. For example, the binder resin may be thermosetting resins such as polybenzoxazine resins, phenol resins, epoxy resins, and condensed polynuclear aromatic resins. They may be used singly or two or more thereof may be used in combination.

<Polybenzoxazine Resin>

The polybenzoxazine resin is a thermosetting resin having a dihydrobenzoxazine ring in the molecule and, for example, can be produced by subjecting a compound having a phenolic hydroxyl group, a primary amine, and a formaldehyde to a condensation reaction.
Bisphenol A as the compound having a phenolic hydroxyl group, aniline as the primary amine, and formalin, paraformaldehyde, trioxane, or the like as the formaldehyde can be preferably used.

<Phenol Resin>

The phenol resin may be either novolak type one or resol type one. However, since an acid catalyst is necessary as a curing catalyst in the case of the resol type one, the novolak type one is preferred from the viewpoint of corrosion of instruments and the like. In the case of a novolak type phenol resin, hexamethylenetetramine is usually used as a curing agent but a curing agent such as hexamethylenetetramine may not be used in the case where the above polybenzoxazine resin is used in combination.
As the phenol resin, any of straight phenol resins and various modified phenol resins modified with a rubber or the like can be used.

<Epoxy Resin>

As the epoxy resin, glycidyl ether type epoxy resins of a bisphenol are suitable from the viewpoint of performance of composite materials to be obtained.
As the above bisphenol, there may be mentioned 2,2-bis (4-hydroxyphenyl) propane (bisphenol A), bis (hydroxyphenyl) methane (bisphenol F), bis (4-hydroxyphenyl) sulfone (bisphenol S), bis (4-hydroxyphenyl) ether, 4,4'-dihydroxybiphenyl, 1,1-bis (4-hydroxyphenyl) cyclohexane, and the like. In the case of these epoxy resins, an amine-based curing agent, an acid anhydride-based curing agent, or the like are used as a curing agent and an imidazole-based curing accelerator or the like is used as a curing accelerator.

<Condensed Polynuclear Aromatic resin>

The condensed polynuclear aromatic resin (common name: COPNA resin) is not particularly limited and conventionally known COPNA resins may be mentioned. Specifically, the COPNA resin may be polynuclear aromatic resins obtained by reacting condensed polycyclic aromatic hydrocarbons such as naphthalene, acenaphthene, phenanthrene, anthracene, pyrene, and an alkyl-substituted compound thereof with an aromatic hydrocarbon compound substituted with at least two hydroxymethyl groups or halomethyl groups, preferably a hydroxymethyl compound such as dihydroxymethylbenzene (xylylene glycol), dihydroxymethylxylene, trihydroxymethylbenzene, or dihydroxymethylnaphthalene as a crosslinking agent in the presence of an acid catalyst.
Such a COPNA resin is a thermosetting resin that affords a cured product excellent in wear resistance and heat resistance. However, since the COPNA resin uses an acid catalyst as a curing agent, there arises a problem of corrosion of instruments. Therefore, a phenol nucleus-introduced COPNA resin that uses hexamethylenetetramine or the like as a curing agent without using any acid catalyst is preferred.

(Fibrous Material)

The fibrous material to be contained in the composition for the friction material is not particularly limited and both of organic fibers and inorganic fibers can be used. The organic fibers may be high-strength aromatic polyamide fibers (aramide fibers; trade name "Kevler" manufactured by Du Pont, etc.), flame-resistant acrylic fibers, polyimide fibers, polyacrylate fibers, polyester fibers, and the like. On the other hand, the inorganic fibers may be potassium titanate fibers, basalt fibers, silicon carbide fibers, glass fibers, carbon fibers, wollastonite, and the like as well as ceramic fibers such as alumina-silica-based fibers and metal fibers such as stainless fibers, copper fibers, brass fibers, nickel fibers, and iron fibers. These fibrous materials may be used singly or two or more thereof may be used in combination.

(Method for Producing Friction Material)

The friction material of the invention can be produced by the following method, for example.
After a composition for the friction material is obtained by mixing the aforementioned bead-like hollow particles with the friction modifier, the binder resin, and the fibrous material, preforming is conducted at normal temperature under about 10 to 30MPa for 5 to 30 seconds and thereafter, hot molding is conducted under conditions of a temperature of about 130 to 190°C and a pressure of about 10 to 100MPa for about 1 to 30 minutes.

Then, after the resulting molded body is subjected to an after-cure treatment at a temperature of about 160 to 300°C for about 1 to 10 hours according to needs, the molded body is ground into a prescribed size, whereby the friction material of the invention can be produced.

Thus the obtained friction material of the invention can be provided as a friction material for brakes which achieves both of the reduction of the brake noise and the improvement of the material strength.

Owing to the shape of the bead-like hollow particles, the shape is maintained without breakage though stress relaxation even when pressure at compression hot molding of the friction material is imparted and, owing to the existence of the hollow portion, a damping effect is exerted to reduce the brake noise. Moreover, it is considered that the material strength of the friction material is improved by a so-called anchor effect induced by penetration of the matrix resin into the through-hole or non-though hole.

Embodiments

(Embodiments of Bead-Like Hollow Particles of the Invention and Method for Producing the Same)

The following will further explain the bead-like hollow particles of the invention and the method for producing the same with reference to Embodiments 1 and 2 but the bead-like hollow particles of the invention and the method for producing the same are not limited to Embodiments 1 and 2.

Incidentally, the average particle diameter of the bead-like hollow particles was measured according to the following method.

The average particle diameter of the powder particles was determined by a laser diffraction scattering method using a particle size distribution apparatus (Model Name "LS 13 320" manufactured by Beckman Coulter, Inc.). Here, the average particle diameter means 50% particle diameter in a cumulative particle size distribution curve.

Embodiment 1

(1) Using baker's yeast (fresh yeast, manufactured by Kaneka Corporation, average particle diameter: 5μm) as a particulate biological material and colloidal silica (SNOWTEX 20, manufactured by Nissan Chemical Industries, Ltd., average particle diameter: 20nm) as a particulate metal oxide, the baker's yeast and the colloidal silica were mixed in water so as to be 1/2 as a solid mass weight ratio to prepare a 10% by weight aqueous yeast-colloidal silica suspension.

(2) The aqueous yeast-colloidal silica suspension obtained in the above (1) was subjected to a spray drying treatment by means of a two-fluid nozzle spray dryer (manufactured by Ohkawara Kakohki Co., Ltd.) to obtain a powder composed of the yeast as a core and the colloidal silica layer as a shell.

Various conditions for the spray drying treatment by means of the two-fluid nozzle spray dryer are as follows.

Hot air temperature: 180°C
Spraying pressure: 0.2MPa
Liquid-feeding rate: 20g/minute
Atmosphere: atmospheric air

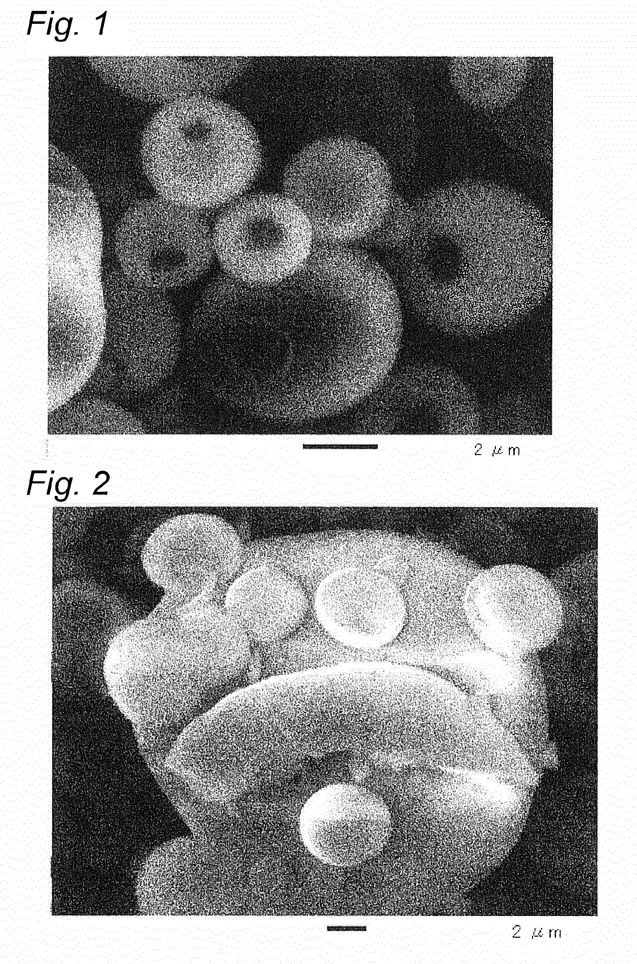

(3) The powder composed of the yeast as a core and the colloidal silica layer as a shell obtained in the above (2) was subjected to a heat treatment in the atmospheric air at 700°C for 2 hours to perform heat decomposition of the core yeast and sintering of the shell colloidal silica layer, thereby obtaining hollow particles. FIG. 1 shows an electron micrograph (magnification: 10,000) of the obtained hollow particles. From FIG. 1, it is apparent that the obtained hollow particles are odd-shaped bead-like particles having a through hole or non-through hole in the surface. The average particle diameter of the bead-like hollow particles was 5 μm.

Comparative Example 1

(1) Using baker's yeast (fresh yeast, manufactured by Kaneka Corporation, average particle diameter: 5μm) as a

particulate biological material and tetraethoxysilane as a metal alkoxide, 3 g of the yeast was mixed with 4g of water and 1ml of ethanol and then 55ml of tetraethoxysilane was added thereto, followed by stirring for 1 hour. Thereby, a hydrolyzate of tetraethoxysilane was precipitated on the surface of the yeast to obtain a powder composed of the yeast as a core and the tetraethoxysilane hydrolyzate layer as a shell.

(2) The powder obtained in the above (1) was then subjected to a heat treatment at 700°C for 2 hours to perform heat decomposition of the core yeast and sintering of the shell tetraethoxysilane hydrolyzate layer, thereby obtaining hollow particles. FIG. 2 shows an electron micrograph (magnification: 10,000) of the obtained hollow particles. From FIG. 2, the obtained hollow particles were approximately spherical and small particles were aggregated on the periphery of the spherical particles (aggregation of the raw materials each other), a part of the raw materials were peeled off in the process of the heat treatment to form debris-like ones in the middle, so that the hollow particles were apparently different in shape from the hollow particles obtained in Embodiment 1. Since the tetraethoxysilane hydrolyzate layer is weak against heat, it seems that condensation has proceeded in the process of the heat treatment and hence the shape of particles is not maintained.

Embodiment 2

(1) Using baker's yeast (fresh yeast, manufactured by Kaneka Corporation, average particle diameter: 5μm) as a particulate biological material and alumina sol (Alumina Sol-200, manufactured by Nissan Chemical Industries, Ltd., featherlike nano particles, average particle diameter: 10 × 100μm (minor axis × major axis of fibrous particles) as a particulate metal oxide, the baker's yeast and the alumina sol were mixed so as to be 1/2 as a solid mass weight ratio to prepare a 3% by weight aqueous yeast-alumina sol suspension.

(2) The aqueous yeast-alumina sol suspension obtained in the above (1) was subjected to a spray drying treatment by means of a two-fluid nozzle spray dryer (manufactured by Ohkawara Kakohki Co., Ltd.) to obtain a powder composed of the yeast as a core and the alumina sol layer as a shell.

Various conditions for the spray drying treatment by means of the two-fluid nozzle spray dryer are as described in (2) of Embodiment 1.

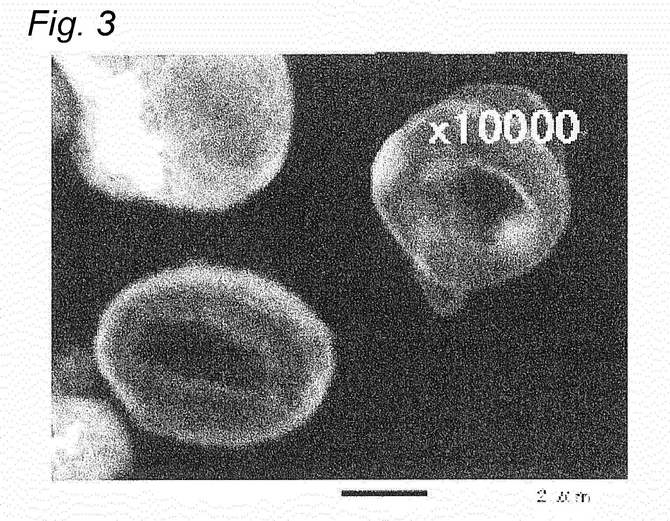

(3) The powder composed of the yeast as a core and the alumina sol layer as a shell obtained in the above (2) was subjected to a heat treatment in the atmospheric air at 700°C for 2 hours to perform thermal decomposition of the core yeast and sintering of the shell alumina sol layer, thereby obtaining hollow particles. FIG. 3 shows an electron micrograph (magnification: 10,000) of the obtained hollow particles. From FIG. 3, it is apparent that the obtained hollow particles are odd-shaped bead-like particles having a through hole or non-through hole in the surface. The average particle diameter of the bead-like hollow particles was 3μm.

Comparative Example 2

(1) Using NBR latex (Nipol 1571CL manufactured by Nippon Zeon Co., Ltd., average particle diameter: 100nm) instead of a particulate biological material and alumina sol (Alumina Sol-200, manufactured by Nissan Chemical Industries, Ltd., featherlike nano particles, average particle diameter: 10 × 100μm (minor axis × major axis of fibrous particles) as a particulate metal oxide, the NBR latex and the alumina sol were mixed in water so as to be 1/2 as a solid mass weight ratio to prepare a 10% by weight aqueous NBR latex-alumina sol suspension.

(2) The aqueous NBR latex-alumina sol suspension obtained in the above (1) was subjected to a spray drying treatment by means of a two-fluid nozzle spray dryer (manufactured by Ohkawara Kakohki Co., Ltd.) to obtain a powder composed of the NBR latex as a core and the alumina sol layer as a shell.

Various conditions for the spray drying treatment by means of the two-fluid nozzle spray dryer are as described in (2)of Embodiment 1.

(3) The powder composed of the NBR latex as a core and the alumina sol layer as a shell obtained in the above (2) was subjected to a heat treatment in the atmospheric air at 700°C for 2 hours. However, since the NBR latex was fluidized during the temperature elevation at heating to 700°C, the shape of particles were not maintained and thus hollow particles were not obtained.

(Embodiments of Friction Material of the Invention)

The following will further explain the friction material of the invention with reference to Embodiments 3 and 4 but the friction material of the invention is not limited to Embodiments 3 and 4.

Incidentally, various properties of the friction material were measured according to the following methods.

(1) Brake Noise Test

The friction material was installed on a practical vehicle and burnish was performed in accordance with JASO-C406-82. A test was performed in a test code of combining a vehicle speed of 30 to 80km/h (8.3 to 22.2m/s), a deceleration of 0.49 to 7.84m/s$^2$, a friction temperature of 20 to 200°C, and an absolute humidity of 5 to 15g/m$^3$, and the occurrence of brake noise was compared. Evaluation was conducted by determining a noise coefficient shown below with weighting of sound pressure ($W_i$) onto occurrence frequency.

$$\text{Noise Coefficient: } N_p = \Sigma(W_i \times N_i)$$

wherein $W_i$ represents weighting of noise and $N_i$ represents a noise occurring rate which is defined by dividing the number of occurrence times of sound pressure having a certain threshold value or more by the total number of braking times.

[Table 1]

Table 1

| Loudness of noise (dB) | 70≤Sp<80 | 80≤Sp<90 | 90≤Sp<100 | 100≤Sp<110 | 110≤Sp |
|---|---|---|---|---|---|
| $W_i$ | 1 | 3 | 10 | 30 | 100 |
| Sp represents a level of sound pressure. | | | | | |

(2) Tensile Strength Test of Friction Material

A test piece having a size of 30mm × 17mm × 4mm (length×breadth×height) was cut out from the molded friction material and tensile strength of the friction material was determined in accordance with JIS K 7713.

Embodiment 3

The bead-like hollow particles obtained in Embodiment 1 was mixed with a phenol resin (containing 10% by weight of hexamethylenetetramine), an aramide pulp, a ceramic fiber (potassium titanate fiber), a metal fiber (copper fiber), barium sulfate, an organic dust (cashew dust), and graphite in the ratios shown in Table 2 to obtain a composition for friction material. As shown in Table 2, the mixing ratio of the bead-like hollow particles was 4% by volume.

Then, after the obtained composition for friction material was preformed (maintained at 20 MPa for 10 seconds), it was charged into a mold for hot molding and was subjected to compression hot molding at 150°C under 40 MPa for 5 minutes to obtain a molded body.

Thereafter, after the obtained molded body was subjected to a heat treatment at 250°C for 3 hours, it was processed into a prescribed size and the noise test and tensile strength test of the friction material were performed. The obtained results are shown in Table 2.

Embodiment 4

A molded body was obtained in the same manner as in Embodiment 3 except that the bead-like hollow particles obtained in Embodiment 2 were used instead of the bead-like hollow particles obtained in Embodiment 1. The test results for the obtained formed body are shown in Table 2.

Comparative Example 3

A molded body was obtained in the same manner as in Embodiment 3 except that an alumina silicate balloon (Fillite manufactured by Japan Fillite Co., Ltd., particle diameter distribution: 5 to 300$\mu$m) that is a spherical hollow material was used instead of the bead-like hollow particles. The test results for the obtained molded body are shown in Table 2.

Comparative Example 4

A molded body was obtained in the same manner as in Embodiment 3 except that fine alumina (Fine Alumina A31 manufactured by Nippon Light Metal Co., Ltd., average particle diameter: 5$\mu$m) that is a solid material was used instead of the bead-like hollow particles. The test results for the obtained formed body are shown in Table 2.

[Table 2]

Table 2

|  |  | Embodiment 3 | Embodiment 4 | Comparative Example 3 | Comparative Example 4 |
|---|---|---|---|---|---|
| Friction material composition (% by volume) | Phenol resin | 19 | 19 | 19 | 19 |
|  | Aramide pulp | 10 | 10 | 10 | 10 |
|  | Ceramic fiber | 19 | 19 | 19 | 19 |
|  | Metal fiber | 3 | 3 | 3 | 3 |
|  | Barium sulfate | 19 | 19 | 19 | 19 |
|  | Bead-like hollow particles | 4 (silica) | 4 (alumina) | - | - |
|  | Spherical hollow particles | - | - | 4 (alumina silicate) | - |
|  | Solid particles | - | - | - | 4 (alumina) |
|  | Organic dust | 18 | 18 | 18 | 18 |
|  | Graphite | 7 | 7 | 7 | 7 |
| Brake noise test (noise coefficient $N_p$) |  | 98 | 123 | 256 | 583 |
| Tensile strength test of friction material (MPa) |  | 13.8 | 12.6 | 7.8 | 5.2 |

As sown in Table 2, it is apparent that the friction materials containing the bead-like hollow particles of the invention can reduce the brake noise and improve the material strength.

Industrial Applicability

According to the present invention, bead-like hollow particles that are odd-shaped particles composed of a metal oxide as a main component and having at least one of a through hole and non-through hole in the surface can be obtained by an easy and convenient method of subjecting a suspension of a particulate biological material and a particulate metal oxide to a spray drying treatment by means of a two-fluid nozzle spray dryer and subjecting the obtained powder composed of the particulate biological material as a core and a layer of the particulate metal oxide as a shell to a heat treatment. The obtained bead-like hollow particles are preferably used as an additive for heat insulating materials, friction materials, and the like. Particularly, when the bead-like hollow particles are added to a friction material, brake noise can be reduced and also material strength can be improved.

**Claims**

1.  A producing method for bead-like hollow particles for use in a friction material, the method comprising:

    spraying and drying a suspension of a particulate biological material and a particulate metal oxide by a two-fluid nozzle spray dryer, to obtain a powder composed of the particulate biological material as a core and a layer of the particulate metal oxide as a shell, wherein a mixing ratio in the suspension is defined by dividing the particulate biological material by the particulate metal oxide is 1/0.5 to 1/2 on the basis of solid mass weight; and
    heating the obtained powder to decompose the particulate biological material as the core and to sinter the layer of the particulate metal oxide so as to form the bead-like hollow particles comprising particles composed of the metal oxide as a main component and having at least one of a through hole and non-through hole in a surface .

2.  The producing method according to claim 1, wherein the particulate biological material is selected from yeast, starch, fungi, algae, spores, and pollen.

3.  The producing method according to claim 1 or 2, wherein the particulate metal oxide is selected from silica, alumina, zinc oxide, titania, yttria, copper oxide, cobalt oxide, and zirconia.

4.  The producing method according to any one of claims 1 to 3, wherein the heating is performed at a temperature of 500 to 900°C.

**Patentansprüche**

1.  Herstellungsverfahren für perlenartige Hohlpartikel zur Verwendung in einem Reibungsmaterial, wobei das Verfahren umfasst:

    Sprühen und Trocknen einer Suspension eines teilchenförmigen biologischen Materials und eines teilchenförmigen Metalloxids mit einem Zweifluid-Düsen-Sprühtrockner, um ein Pulver zu erhalten, das sich aus dem teilchenförmigen biologischen Material als Kern und einer Schicht des teilchenförmigen Metalloxids als Hülle zusammensetzt, wobei ein Mischungsverhältnis in der Suspension definiert ist, indem das teilchenförmige biologische Material durch das teilchenförmige Metalloxid geteilt wird, das 1/0,5 bis 1/2 auf der Grundlage des festen Massengewichts beträgt; und
    Erwärmen des erhaltenen Pulvers, um das teilchenförmige biologische Material als Kern zu zersetzen und die Schicht des teilchenförmigen Metalloxids zu sintern, um die perlenartigen Hohlpartikel zu bilden, die Partikel umfassen, die aus dem Metalloxid als Hauptkomponente bestehen und mindestens eines von einem Durchgangsloch und einem Nichtdurchgangsloch in einer Oberfläche aufweisen.

2.  Herstellungsverfahren nach Anspruch 1, wobei das teilchenförmige biologische Material ausgewählt ist aus Hefe, Stärke, Pilzen, Algen, Sporen und Pollen.

3.  Herstellungsverfahren nach Anspruch 1 oder 2, wobei das teilchenförmige Metalloxid ausgewählt ist aus Siliziumdioxid, Aluminiumoxid, Zinkoxid, Titanoxid, Yttriumdioxid, Kupferoxid, Kobaltoxid und Zirkonoxid.

4.  Herstellungsverfahren nach einem der Ansprüche 1 bis 3, wobei das Erwärmen bei einer Temperatur von 500 bis 900°C durchgeführt wird.

**Revendications**

1.  Procédé de production de particules creuses de type perles destinées à être utilisées dans un matériau de frottement, le procédé comprenant :

la pulvérisation et le séchage d'une suspension d'un matériau biologique particulaire et d'un oxyde métallique particulaire par un sécheur par atomisation à buse bifluidique, pour obtenir une poudre composée du matériau biologique particulaire en tant que noyau et d'une couche de l'oxyde métallique particulaire en tant qu'enveloppe, un rapport de mélange dans la suspension qui est défini en divisant le matériau biologique particulaire par l'oxyde métallique particulaire allant de 1/0,5 à 1/2 sur la base du poids de la masse solide ; et

le chauffage de la poudre obtenue pour décomposer le matériau biologique particulaire en tant que noyau et pour fritter la couche d'oxyde métallique particulaire afin de former les particules creuses de type perles comprenant des particules composées de l'oxyde métallique en tant que constituant principal et comportant l'un au moins parmi un trou traversant et un trou non traversant dans une surface.

2. Procédé de production selon la revendication 1, dans lequel le matériau biologique particulaire est choisi parmi de la levure, de l'amidon, des champignons, des algues, des spores et du pollen.

3. Procédé de production selon la revendication 1 ou 2, dans lequel l'oxyde métallique particulaire est choisi parmi de la silice, de l'alumine, un oxyde de zinc, un oxyde de titane, un oxyde d'yttrium, un oxyde de cuivre, un oxyde de cobalt et de la zircone.

4. Procédé de production selon l'une quelconque des revendications 1 à 3, dans lequel le chauffage est effectué à une température de 500 à 900 °C.

*Fig. 1*

2 μm

*Fig. 2*

2 μm

## Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006326557 A
- JP 2005263550 A
- JP 2003160330 A
- JP 2009114050 A

### Non-patent literature cited in the description

- Hydrothermal synthesis of TiO2 hollow spheres using rapeseed pollen grains as template. **LI P et al.** JOURNAL OF INORGANIC MATERIALS JANUARY 2008 SCIENCE PRESS; RESEARCH CENTER FOR ECO-ENVIRONMENTAL SCIENCES. CHINESE ACADEMY OF SCIENCES CN, January 2008, vol. 23, 49-54
- Control of particle morphology from porous to hollow by spray-drying with a two-fluid nozzle and template materials. **OGI T et al.** KAGAKU KOGAKU RONBUN-SHU 2007 SOCIETY OF CHEMICAL ENGINEERS. KYORITSU BUILDING JP, 22 October 2007, vol. 33, 468-475
- **YANG, YUN et al.** A green route to silica nanoparticles with tunable size and structure. *GREEN CHEMISTRY,* 2008, vol. 10 (2), 183-190